# EUROPÄISCHE PATENTSCHRIFT

(11) **EP 3 046 413 B1**
(45) Veröffentlichungstag und Bekanntmachung des Hinweises auf die Patenterteilung: **09.08.2017**
(21) Anmeldenummer: 14786120.7
(22) Anmeldetag: 13.09.2014
(51) Int. Cl.: A01M 1/20, A01G 13/00, A01M 17/00, A01M 21/04, B26F 1/26

(54) **ANORDNUNG ZUR ABGABE VON WIRKSTOFFEN AN AGRAR- ODER FORSTERZEUGNISSE**
ARRANGEMENT FOR EMANATION OF ACTIVE AGENT IN AGRIGULTURAL PRODUCE
ENSEMBLE DE LIBÉRATION DE PRINCIPES ACTIFS SUR DES PRODUITS AGRICOLES OU FORESTIERS

(30) Priorität: 17.09.2013 DE 102013015323
(43) Veröffentlichungstag der Anmeldung: 27.07.2016
(73) Patentinhaber: RKW SE, 67227 Frankenthal (DE)
(72) Erfinder: EUBELER, Jan, 67229 Grosskarlbach (DE); MAIER, Leonhard, 83547 Babensham (DE); VOGGENAUER, Robert, 83512 Wasserburg (DE); WALLER, Paul, 83026 Rosenheim (DE); WACHS, Tilo, 53424 Remagen (DE)
(74) Vertreter: Busch, Tobias
(86) Internationale Anmeldenummer: PCT/EP2014/002479
(87) Internationale Veröffentlichungsnummer: WO 2015/039740

(56) Entgegenhaltungen:
- WO-A1-97/03795
- DE-A1- 19 842 956
- DE-A1-102007 045 428
- GB-A- 2 330 998

## Beschreibung

Die Erfindung betrifft eine Anordnung zur Abgabe von Wirkstoffen an Agrar- oder Forsterzeugnisse mit einer Klebstoffschicht, die mindestens einen Wirkstoff enthält.
Die Abgabe von Wirkstoffen spielt in der Agrar- und Forstwirtschaft eine zentrale Rolle. Bei den Wirkstoffen kann es sich um Wachstumsförderer, beispielsweise Dünger, Pflanzenschutzmittel, beispielsweise Insektizide, Fungizide oder Herbizide oder um Wachstumsregulatoren, beispielsweise zur Keimhemmung handeln. Die Wirkstoffe können ausgebracht werden, solange das Produkt noch wächst oder auch nachdem das Produkt geerntet ist. Somit sind Agrar- oder Forsterzeugnisse im Sinne der Erfindung als noch wachsende Pflanzen und/oder bereits geerntete bzw. gefällte Pflanzen und Pflanzenteile, wie beispielsweise deren Früchte, Samen usw., zu verstehen.
Ein Großteil der Wirkstoffe in der Agrar- und Forstwirtschaft wird großflächig verteilt, beispielsweise durch das Versprühen von Flüssigkeiten oder die Ausbringung von Pulvern bzw. Granulaten.
So beschreibt die DE 199 13 591 A1 ein Verfahren zur Behandlung einer Kartoffellagerhalle mit einem Aerosol eines Keimverhinderungsmittels.
Es sind auch Anordnungen bekannt, bei denen die Wirkstoffe nicht als uniforme Dampfwolke abgegeben werden, sondern nur an wenigen Stellen in Form von Punktquellen. So beschreibt die DE 41 01 878 A1 eine Vorrichtung zur Abgabe von Pheromonen. Dabei werden Pheromonbehälter an einzelnen Stellen aufgehängt, die als Punktquellen Wirkstoffe abgeben.
Die EP 0 142 658 A1 beschreibt Träger aus organischem Material mit integrierten Wirkstoffen. Bei den Trägern handelt es sich um Folien. Dabei wird in die polymere Matrix der Folie der Wirkstoff integriert. Solche Systeme haben nur ein sehr begrenztes Aufnahmevermögen für Wirkstoffe.
Die DE 103 29 275 A1 beschreibt eine Klebstoffschicht, die Wirkstoffe enthält. Solche Systeme, bei denen der Wirkstoff in eine Klebstoffschicht eingebracht wird, haben gegenüber Folienträgermaterialien eine deutlich höhere Aufnahmekapazität. In der DE 103 29 275 A1 wird ein Verbund beschrieben, welcher eine übertragbare Kleberschicht und eine Trägerfolie umfasst. Die übertragbare Kleberschicht und die Trägerfolie sind in nicht dauerhafter Weise miteinander verbunden. Der Verbund besteht aus zwei geschlossenen Trägerschichten zwischen denen die wirkstoffhaltige Klebstoffschicht angeordnet ist. Bei der Anwendung des Systems wird eine Trägerschicht abgezogen, so dass die Klebstoffschicht völlig frei liegt. Die Klebstoffschicht kann dabei schnell austrocknen. Weiterhin besteht die Gefahr, dass die Klebstoffschicht in direkten Kontakt mit den Erzeugnissen kommt oder dass der Anwender diese berührt. Dies ist problematisch, da viele Wirkstoffe gesundheitlich bedenklich sind.

Weiterhin ist aus der DE 10 2007 045 428 A1 eine Anordnung zur Abgabe von Wirkstoffen an Agrar- oder Forsterzeugnisse mit einer Klebstoffschicht, die mindestens einen Wirkstoff enthält, wobei die Klebstoffschicht auf einer Fläche haftet und die Klebstoffschicht eine Deckschicht mit der Fläche verbindet. Aufgabe der Erfindung ist es, eine Anordnung zur Abgabe von Wirkstoffen anzugeben, die eine Klebstoffschicht mit einer hohen Aufnahmekapazität für Wirkstoffe aufweist. Der Wirkstoff soll über einen langen Zeitraum abgegeben werden. Es soll vermieden werden, dass die Agrar- oder Forsterzeugnisse bzw. der Anwender in direkten Kontakt mit der wirkstoffhaltigen Klebstoffschicht kommt. Die Wirkstoffe sollen eine möglichst hohe Effizienz entfalten. Weiterhin soll sich die Anordnung durch eine hohe Zuverlässigkeit und eine stabile Struktur auszeichnen. Auch soll die Anordnung auf potentielle Kunden ansprechend wirken.

Diese Aufgabe wird erfindungsgemäß dadurch gelöst, dass die Klebstoffschicht auf einer Fläche haftet und die Klebstoffschicht eine Deckschicht mit der Fläche verbindet, wobei die Deckschicht eine Vielzahl an Öffnungen zur Abgabe des Wirkstoffs aufweist und die Deckschicht Ausstülpungen aufweist, die aus einer Ebene der Deckschicht um eine Höhe hervorragen.

Erfindungsgemäß dient die Klebstoffschicht als Träger für den Wirkstoff und verbindet gleichzeitig eine Deckschicht mit einer Fläche.

Bei einer besonders günstigen Variante der Erfindung werden Klebstoffe ohne Verfestigungsmechanismus eingesetzt. Dabei eignen sich insbesondere Haftklebstoffe, die nach dem Auftragen hochviskos und dauerklebrig bleiben.

Als Klebstoffschicht eignet sich ein Homopolymer. Bei einer besonders günstigen Variante der Erfindung wird Polyisobutylen (PIB) als Klebstoffschicht eingesetzt. Alternativ oder ergänzend können auch ein Polyurethan und/oder PVC-Plastisol als Klebstoffschicht eingesetzt werden.

Bei einer Variante der Erfindung wird ein biologisch abbaubarer Klebstoff eingesetzt. Dabei eignen sich insbesondere Klebstoffe auf Wasserbasis.

Die Klebstoffschicht haftet auf einer Fläche. Dabei kann es sich um die Oberfläche eines Gegenstandes handeln.

Auch kann die Fläche von einer weiteren Deckschicht gebildet werden, die ebenfalls Öffnungen aufweist. Bei dieser Variante der Erfindung verbindet die Klebstoffschicht zwei Deckschichten miteinander. Dabei handelt es sich um einen Verbund mit einer mittigen Klebstoffschicht und zwei äußeren Deckschichten. Somit kann zu zwei Seiten Wirkstoff aus der Klebstoffschicht über die Öffnungen in den Deckschichten abgegeben werden.

Bei einer besonders vorteilhaften Variante der Erfindung handelt es sich bei der Fläche um eine geschlossene Trägerschicht, vorzugsweise um eine Folie aus Polyethylen, Polypropylen, Polystryrol, Polyethylenterephthalaten, Polyvinylchlorid, Polylactid, thermoplastischen Polyurethan oder beschichtetem Zellglas sowie Blends.

Bei einer günstigen Variante der Erfindung besteht die Trägerfolie zumindest teilweise aus einem biologisch abbaubaren Polymer, vorzugsweise einem aliphatischen Polyester, insbesondere einem aromatisch aliphatischen Polyester. Bei einer Variante besteht die Trägerschicht aus einem Blend aus Polymilchsäuren (PLA) und wenigstens einem aromatisch aliphatischen Copolyester.

Die Klebstoffschicht verbindet die Trägerschicht mit der Deckschicht. Bei einer Variante der Erfindung haftet auf beiden Seiten einer Trägerschicht eine Klebstoffschicht, wobei jede Klebstoffschicht jeweils eine Deckschicht mit der Trägerschicht verbindet. Dabei handelt es sich um einen Verbund bei dem die Trägerschicht mittig zwischen zwei Klebstoffschichten und zwei äußeren Deckschichten angeordnet ist. Somit kann zu zwei Seiten Wirkstoff aus den Kleberschichten über die Öffnungen in den Deckschichten abgegeben werden.

Bei der erfindungsgemäßen Anordnung wird die Deckschicht über die Klebstoffschicht dauerhaft mit der Fläche verbunden ist. Beim Einsatz der Anordnung verbleibt die Deckschicht auf der Klebstoffschicht und schützt während der Anwendung die Erzeugnisse und den Anwender vor direkten Kontakt mit der Klebstoffschicht. Weiterhin wird ein Austrocknen der Klebstoffschicht verhindert. Zur Migration des Wirkstoffs aus der Klebstoffschicht weist die Deckschicht eine Vielzahl an Öffnungen auf durch die der Wirkstoff austritt.

Vorzugsweise besteht die Deckschicht aus einem thermoplastischen Material, das mit Ausnahme der Öffnungen ansonsten geschlossen ist. Dabei erweist es sich als besonders vorteilhaft, wenn die Deckschicht aus einem Polyolefin besteht. Als Material für die Deckschicht eignen sich beispielsweise Polyethylen oder Polypropylen aber auch Polystyrol, Polyethylen-Terephthalaten, Polyvinylchlorid, Polylactid, thermoplastischen Polyurethan oder beschichtetem Zellglas sowie Blends.

Bei einer günstigen Variante der Erfindung besteht die Deckschicht aus einem biologisch abbaubaren Polymer, vorzugsweise einem aliphatischen Polyester, insbesondere einem aromatisch aliphatischen Polyester. Bei einer Variante der Erfindung besteht die Deckschicht aus einem Blend aus Polymilchsäuren (PLA) und wenigstens einem aromatisch aliphatischen Copolyester.

Die Deckschicht weist bis auf die Öffnungen eine für den Wirkstoff undurchlässige Oberfläche auf. Der Bereich der Oberfläche, durch den der Wirkstoff austreten kann, wird als "open area" bezeichnet. Vorzugsweise beträgt die "open area", mehr als 2 %, vorzugsweise mehr als 3 %, insbesondere mehr als 4 %. Die "open area" ist vorzugsweise kleiner als 50 %, insbesondere kleiner als 40 %. Besonders günstig erweist es sich, wenn die "open area" im Bereich zwischen 4 und 35 % liegt.

Die Deckschicht weist Ausstülpungen auf, die aus einer Ebene der Deckschicht um eine Höhe hervorragen. Durch diese Ausstülpungen werden Abstandshalter zur Klebstoffschicht geschaffen. Durch diese Konstruktion wird besonders wirksam ein Kontakt der Agrar- bzw. Forsterzeugnisse bzw. des Anwenders mit der wirkstoffhaltigen Klebstoffschicht vermieden.

Bei einer besonders günstigen Ausführung der Erfindung bilden die Ausstülpungen die Öffnungen. Dazu weist jede Ausstülpung eine Wandung auf, die einen Hohlraum bildet und eine Öffnung umschließt. Bei dieser Art von Ausstülpungen kann es sich um zylinderartige, kegelförmige und/oder hyperboloide Gebilde handeln, die aus der Ebene der Deckschicht emporragen und deren Ränder die Öffnungen bilden, aus denen der Wirkstoff austritt. Vorzugsweise handelt es sich um langgestreckte, tunnelartige Kapillaren, durch die der Wirkstoff wandert.

Durch die Wandungen der Ausstülpungen werden Schnorchel gebildet, die den Wirkstoff von der Klebstoffschicht zu der Öffnung führen. Die Hohlräume schützen vor Einwirkungen, beispielsweise einer Luftströmung, sodass sich der Wirkstoff zunächst in den kapillarartigen Hohlräumen ansammeln kann. Dies führt zu einer verbesserten Wirksamkeit.

Bei einer besonders vorteilhaften Ausführung der Erfindung werden die Ausstülpungen in der Deckschicht erzeugt, indem thermoplastisches Material über ein Element geführt wird, das Löcher aufweist. Vorzugsweise handelt es sich bei dem Element um eine rotierende Walze. Die Walze weist Bohrungen als Löcher auf. Mittels einer Unterdruckvorrichtung wird eine Druckdifferenz erzeugt, sodass das thermoplastische Material in die Löcher gezogen wird. Dabei kommt es zu einem Ausdünnen des thermoplastischen Materials im Bereich der Löcher, so dass sich Öffnungen in der Deckschicht bilden. Dadurch bildet sich eine Deckschicht mit Ausstülpungen unter Erkaltung des thermoplastischen Materials aus. Diese vakuumperforierte Deckschicht wird mit einer Fläche über eine wirkstoffhaltige Klebstoffschicht verbunden.

Das thermoplastische Material kann in unterschiedlicher Weise über das Element geführt werden. Bei einer Variante wird das thermoplastische Material als Schmelze auf das Element extrudiert. Dabei wird der thermoplastische Polymerfilm im schmelzflüssigen Zustand einer Vakuumperforationsvorrichtung zugeführt. Der Polymerfilm wird durch eine Unterdruckvorrichtung in die Löcher eingesaugt, wobei die Polymerschmelze langgestreckte Hohlräume in Form von Kapillaren ausbildet. Nach Abkühlung des Films wird die vakuumperforierte Deckschicht abgenommen und mittels einer Klebeschicht mit einer weiteren Schicht verbunden.

Bei einer anderen Variante des Verfahrens wird eine thermoplastische Folie erwärmt und über ein Element geführt, das Löcher aufweist. Auch hier wird ein Unterdruck angelegt. Die erwärmte Folie wird im Bereich der Löcher eingezogen, sodass sich Ausstülpungen bilden, die eine Wandung aufweisen, welche einen langgestreckten Hohlraum bilden und eine Öffnung umschließen.

Die Höhe der Ausstülpung ist vorzugsweise um den Faktor 5, insbesondere um den Faktor, 10 größer als die Dicke der Ebene der Deckschicht. Die Höhe der Ausstülpung beträgt vorzugsweise mehr als 100 µm, insbesondere mehr als 300 µm. Dadurch entstehen langgestreckte Kapillaren mit einem luftgefüllten Hohlraum, in dem sich der Wirkstoff anreichert. Die Höhe der Ausstülpungen beträgt vorzugsweise weniger als 1500 µm, insbesondere weniger als 1000 µm.

Die Ausstülpungen können kegelförmig ausgebildet sein, so dass der engste Querschnitt vom äußeren Rand gebildet der Ausstülpung gebildet wird. Es können auch zylindrische Ausstülpungen gebildet werden, bei denen der Querschnitt des Hohlraums weitgehend konstant bleibt.

Bei einer besonders vorteilhaften Ausführung der Erfindung weisen die Ausstülpungen Einschnürungen auf. Ausgehend von einem engsten Querschnitt erweitert sich der freie Querschnitt des Hohlraums zur Öffnung hin.

Bei einer Variante der Erfindung liegt die Ebene der Deckschicht auf der Klebstoffschicht auf, und die Ausstülpungen ragen von der Klebstoffschicht nach außen weg. Aus der Klebstoffschicht tritt der Wirkstoff in die Hohlräume der Ausstülpungen und tritt dann durch Öffnungen aus, die vom äußern Rand der Ausstülpungen gebildet werden.

Bei einer alternativen Variante der Erfindung ist die Ebene der Deckschicht beabstandet zur Klebstoffschicht angeordnet. Die Ausstülpungen ragen von der Ebene der Deckschicht zur Klebstoffschicht hin. Die Öffnungen liegen in der Ebene der Deckschicht, während die Ränder der Ausstülpungen zur Klebstoffschicht ragen. Bei dieser Variante der Erfindung werden Räume zwischen benachbarten Ausstülpungen gebildet, in denen sich der Wirkstoff anreichert.

Vorzugsweise weist der äußere Rand der Ausstülpungen eine unregelmäßig gelappte und/oder gefaltete Form auf. Dadurch kann aus den Räumen zwischen benachbarten Ausstülpungen wirkstoffreiche Luft in die Hohlräume der Ausstülpungen diffundieren und von dort an durch die Öffnungen austreten.

Bei der Herstellung der Anordnung wird der Klebstoff als Klebstoffschicht auf die Deckschicht und/oder die Fläche aufgebracht. Der Klebstoff kann auf eine als geschlossene Trägerschicht ausgebildete Fläche aufgebracht werden, beispielsweise mit einer Rasterwalze. Auch kann der Klebstoff auf die Trägerschicht gerackelt werden. Die Trägerschicht und die Deckschicht werden dann über die Kleberschicht miteinander kaschiert.

Aufgrund der verhältnismäßig hohen Ausstülpungen wird eine besonders angenehme Haptik, eine sogenannte "soft touch"-Haptik, erzielt.

Weitere Vorteile und Merkmale der Erfindung ergeben sich aus der Beschreibung von Ausführungsbeispielen anhand von Zeichnungen und aus den Zeichnungen selbst. Dabei zeigt:
- Figur 1: eine Seitenansicht einer Anordnung zur Abgabe von Wirkstoffen in einer Lagerhalle,
- Figur 2: eine Vorderansicht einer Anordnung zur Abgabe von Wirkstoffen in einer Lagerhalle,
- Figur 3: eine Anordnung zur Abgabe von Wirkstoffen oberhalb einer Schüttung,
- Figur 4: eine Schnittdarstellung durch einen Verbund mit einer Deckschicht, deren Ausstülpungen von der Kleberschicht wegragen,
- Figur 5: einen Schnitt durch einen Verbund mit einer Deckschicht, deren Ausstülpungen zur Klebstoffschicht hinragen,
- Figur 6: eine schematische Darstellung eines Verfahrens zur Herstellung der Deckschicht,
- Figur 7a: die Deckschicht während des Herstellungsprozesses in einem Anfangsstadium,
- Figur 7b: die Deckschicht während des Herstellungsprozesses in einem Endstadium,
- Figur 7c: einen Schnitt durch die erkaltete Deckschicht.

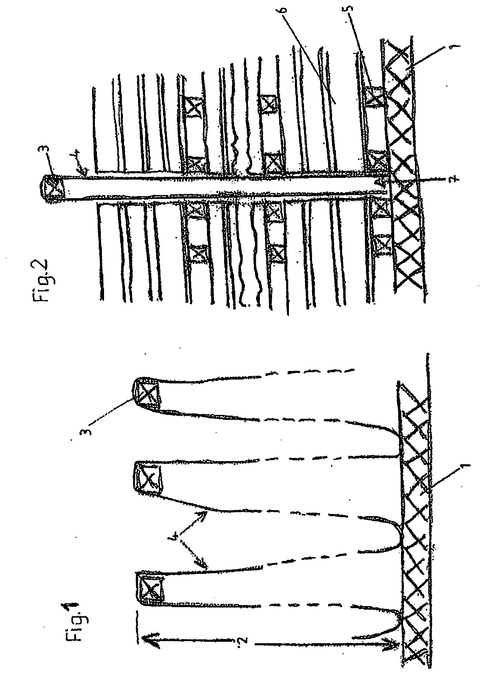

Figur 1 zeigt schematisch eine Lagerhalle für Agrar- oder Forsterzeugnisse mit einem Lagerboden 1. In einer Höhe 2 sind beabstandet zum Lagerboden 1 Halteanordnungen 3 positioniert. Ein Verbund 4 wird als Bahn abwechselnd zwischen den Halteranordnungen 3 und dem Lagerboden 1 geführt. Bei den Halteanordnungen 3 handelt es sich im Ausführungsbeispiel um Balken die in der Lagerhalle angeordnet sind.

Figur 2 zeigt eine Lagerhalle mit einem Lagerboden 1, auf dem Paletten 5 und Kisten 6 abwechselnd übereinander gestapelt sind. Dazwischen verläuft eine Kistengasse 7. Innerhalb der Kistengasse 7 ist eine Anordnung zur Abgabe von Wirkstoffen positioniert. Dabei handelt es sich um einen Verbund 4 der zwischen Halteanordnungen 3 und dem Lagerboden 1 verläuft. Die Kisten 6 sind mit Agrarprodukten gefüllt, beispielsweise mit Kartoffeln.

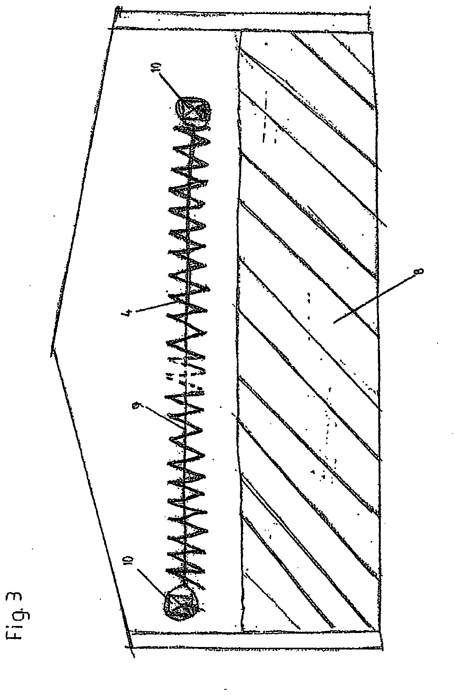

Figur 3 zeigt eine Anordnung zur Abgabe von Wirkstoffen, die oberhalb einer Schüttung 8 aus Agrarerzeugnissen angeordnet ist, beispielsweise einer Kartoffelschüttung. Ein Verbund 4 ist auf einem Führungselement 9 angeordnet, das zwischen zwei Befestigungen 10 verläuft. Der Verbund 4 ist als gefaltete Bahn auf dem Führungselement aufgereiht. Im Ausführungsbeispiel handelt es sich beim Führungselement 9 um ein Stahlseil, das zwischen den beiden Befestigungen 10 gespannt ist.

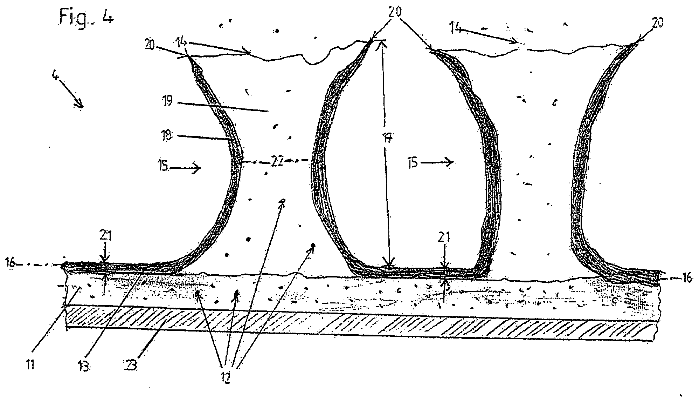

Figur 4 zeigt eine schematische Darstellung eines Verbundes 4. Der Verbund 4 umfasst eine Klebstoffschicht 11, die einen Wirkstoff 12 enthält. Der Wirkstoff 12 ist rein schematisch als schwarze Punkte dargestellt. Die Klebstoffschicht 11 ist dauerhaft mit einer Deckschicht 13 verbunden. Die Deckschicht 13 besteht aus einem thermoplastischen Material und weist eine Vielzahl an Öffnungen 14 zur Abgabe des Wirkstoffs 12 auf. Als Deckschicht 13 wird im Ausführungsbeispiel eine Folie aus einem Polyethylen oder einem Polypropylen verwendet.

Die Klebstoffschicht 11 besteht im Ausführungsbeispiel aus Polyisobutylen (PIB) und enthält als Wirkstoff 12 bis zu zehn Massenprozent eines Wachstumsregulators. Im Ausführungsbeispiel handelt es sich bei dem Wachstumregulator um Isopropyl-N-(m-chlorphenyl)-carbamat. Als Klebstoffschicht 11 können alternativ auch 1 K- und/oder 2K-Polyurethansysteme eingesetzt werden.

Die Deckschicht 13 weist Ausstülpungen 15 auf, die aus einer Ebene 16 der Deckschicht 13 um eine Höhe 17 vorragen.

Jede Ausstülpung 15 weist eine Wandung 18 auf, die einen Hohlraum 19 bildet und eine Öffnung 14 umschließt. Die Öffnungen 14 werden von den äußeren Rändern 20 der Ausstülpungen 15 umschlossen. Die Hohlräume 19 erstrecken sich von der Klebstoffschicht 11 bis zu den Öffnungen 14.

Die Höhe 17 der Ausstülpungen 15 sind um mehr als den Faktor 5, insbesondere mehr als den Faktor 10 größer als die Dicke 21 der Ebene 16 der Deckschicht 13.

Im Ausführungsbeispiel weisen die Hohlräume 19 einen engsten Querschnitt 22 auf. Ausgehend von diesem engsten Querschnitt 22 erweitert sich der Querschnitt der Hohlräume 19 zu den Öffnungen 14 und/oder zur Klebstoffschicht 11 hin. Der von dem äußeren Rand 20 jeder Ausstülpung 15 begrenzte Querschnitt bildet die Öffnung 14. Der Querschnitt der Öffnung 14 ist größer als der engste Querschnitt 22 eines Hohlraums 19.

Die Ebene 16 der Deckschicht 13 bildet die glatte Seite der Deckschicht 13. Die Ausstülpungen 15 der Deckschicht 13 bilden die strukturierte Seite der Deckschicht 13, die eine dreidimensionale Gestaltung aufweist.

Der Querschnitt des Hohlraums 19 nimmt in axialer Richtung von der Stelle des engsten Querschnitts 22 bis zum freien Rand 20 der Ausstülpungen 15 zu. Der engste Querschnitt 22 des Hohlraums 19 ist in einer Ebene gelegen, welche zu der Ebene 16 der Deckschicht 13 benachbart ist und welche sich in einem Abstand von dem freien Rand 20 der Ausstülpungen 15 befindet.

Der äußere Rand 20 der Ausstülpungen 15 weist eine unregelmäßig gelappte bzw. gefaltete Form auf. Bei dem in Figur 4 dargestellten Ausführungsbeispiel liegt die Ebene 16 der Deckschicht 13 auf der Klebstoffschicht 11 auf.

Die Klebstoffschicht 11 verbindet die Deckschicht 13 mit einer Fläche 23. Bei der Fläche 23 handelt es sich um eine Trägerschicht, die im Ausführungsbeispiel aus einem Polyethylen besteht.

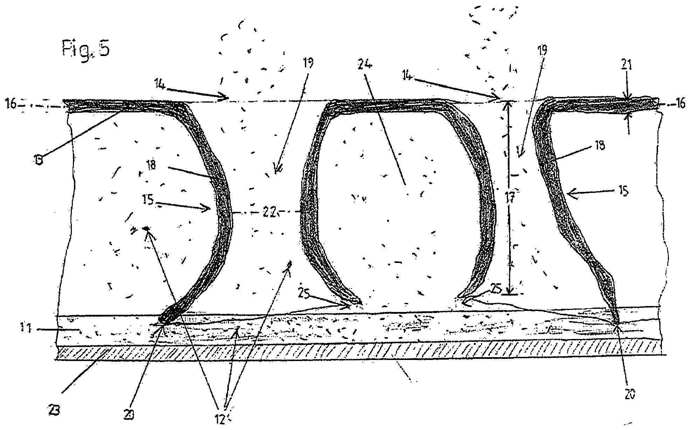

Figur 5 zeigt eine Variante der Erfindung, bei der die Öffnungen 14 in der Ebene 16 der Deckschicht angeordnet sind und die Ausstülpungen 15 zur Klebstoffschicht 11 hinragen. Die Ebene 16 ist bei der in Figur 5 dargestellten Variante beabstandet zur Klebstoffschicht 11 angeordnet. Der äußere Rand 20 der Ausstülpungen 15 ragt zumindest teilweise in die Klebstoffschicht 11.

Zwischen benachbarten Ausstülpungen 15 werden dadurch Räume 24 gebildet. In den Räumen 24 kommt es zu einer Anreicherung des Wirkstoffs 12. Da der äußere Rand 20 der Ausstülpungen 15 eine unregelmäßige Struktur aufweist, gibt es Verbindungsstellen 25, durch die der Wirkstoff 12 aus den Räumen 24 in die Hohlräume 19 wandert und dann über die Öffnungen 14 abgegeben wird. Durch diese Konstruktion wird die Wirksamkeit bei der Anwendung der Anordnung erhöht, da es zu einer Anreicherung des flüchtigen Wirkstoffs 12 kommt. Dies ist insbesondere vorteilhaft bei Wirkstoffen 12, die einen verhältnismäßig geringen Dampfdruck aufweisen.

Bei dem erfindungsgemäßen Verfahren zur Herstellung einer Anordnung zur Abgabe von Wirkstoffen kommen mehrere Schritte zum Einsatz. Der Wirkstoff 12 wird in einen Klebstoff eingebracht. Bei dem Wirkstoff 12 kann es sich um einen Wachstumsregulator, beispielsweise einen Keimhemmer, einen Dünger, ein Pflanzenschutzmittel, wie beispielsweise ein Fungizid, ein Herbizid oder ein Insektizid oder um Pheromone handeln.

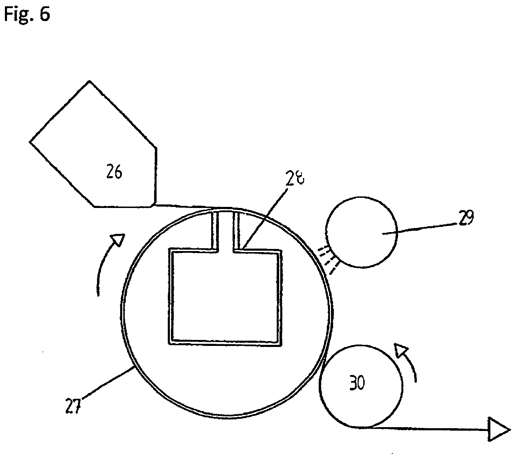

Die erfindungsgemäße Deckschicht 13 wird bei dem in Figur 6 dargestellten Verfahrensschema aus einem Polymerfilm 25 im schmelzflüssigen Zustand hergestellt. Eine solche Art der Herstellung wird auch als "inline-perforation" bezeichnet. Wie bereits ausgeführt, kann die Deckschicht 13 auch auf Basis einer erwärmten Folie hergestellt werden, wobei ein solches Verfahren dann als "offline-perforation" bezeichnet wird.

Bei der "inline-perforation" wird der schmelzflüssige Polymerfilm aus einem Breitschlitzwerkzeug 26 auf ein Element 27 aufgebracht, das Löcher aufweist. Bei dem Element 27 handelt es sich im Ausführungsbeispiel um einen rotierenden Zylinder der Bohrungen aufweist. Mittels einer Unterdruckvorrichtung 28 wird eine Druckdifferenz erzeugt. Der Polymerfilm 25 wird durch die Unterdruckvorrichtung 28 in den perforierten Zylinder gesaugt. Dadurch wird die Polymerschmelze als langgestreckte Ausstülpungen 15 ausgebildet.

Nach der Abkühlung des Films durch eine Kühleinrichtung 29 wird die Deckschicht 13 mittels einer Walze 30 abgeführt.

Die Deckschicht 13 wird dann mit einer als Trägerschicht ausgebildeten Fläche 23 über den wirkstoffhaltigen Klebstoff verbunden. Dazu wird eine Klebstoffschicht 11 mittels einer Rasterwalze (nicht dargestellt) auf die Trägerschicht aufgebracht. Die Trägerschicht wird mit der Deckschicht 13 kaschiert.

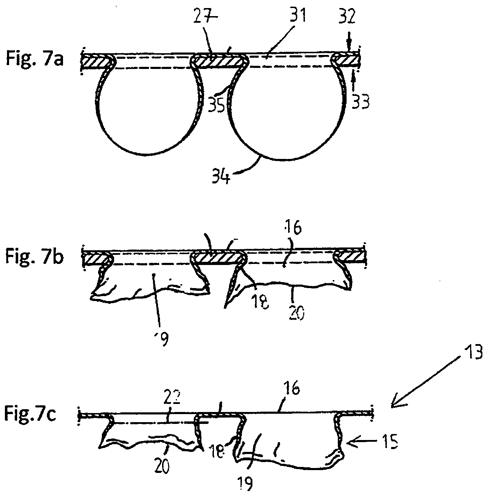

Die Figuren 7a und 7b zeigen zwei Stadien während des Herstellungsprozesses der Deckschicht 13. Auf dem Element 27, dessen Dicke in der Größenordnung von 0,2 mm liegt sind Löcher 31 gleichmäßig verteilt. Die Löcher 31 weisen einen Durchmesser von mehr als 0,4 mm, insbesondere mehr als 0,6 mm und weniger als 1,2 mm, insbesondere weniger als 1,0 mm, auf. Bei den Darstellungen gemäß Fig. 7a und 7b ist eine heißplastische Folie aufgelegt, deren Ausgangsdicke vorzugsweise zwischen 15 µm und 70 µm liegt.

Durch einen Differenzdruck, der von der Folienoberseite 32 zur Folienunterseite 33 wirkt, wird das Folienmaterial durch die Löcher 31 hindurch in Form von Blasen 34 verformt. Der Durchmesser der Blasen ist größer als der Durchmesser der Löcher 31. Dadurch verformt sich das Folienmaterial in einem Bereich 35 seitlich über die Lochgrenzen hinaus.

Infolge des über den Elastizitätgrad hinausgehenden Verformungsgrades und aufgrund der Abkühlung, die das Folienmaterial insbesondere im Bereich der Berührung in der Nähe des Elements 27 erfährt, findet eine Rückverformung nur beschränkt statt. Im Bereich 35 bleibt der den Lochdurchmesser übersteigende größere Durchmesser des Blasenmaterials größtenteils erhalten, während der Materialanteil, der zuvor die Blasenkuppel bildete, sich weitgehend zum Bereich 35 hin zurückzieht. Da der Vorgang des Berstens nicht geometrisch gleichmäßig verläuft, bildet sich ein Rand 20 mit einer lappigen, welligen, ungleichmäßigen, rissigen und/oder faltigen Struktur aus.

Wenn im weiteren Verlauf des Verfahrens die Folie von dem Element 27 abgenommen wird, lassen sich die gebildeten Ausstülpungen 15 zwar aus den Löchern 31 des Elements 27 herausziehen; jedoch behalten sie die in Figur 7c veranschaulichte, erweiterte Randform bei, die für das besonders vorteilhafte Verhalten mitverantwortlich ist.

Die Form der Hohlräume 19 ist dadurch geprägt, dass ihr Durchmesser ausgehende von der Ebene 16 bis zum engsten Querschnitt 22 hin abnimmt und dann zum Rand 20 wieder zunimmt. Der engste Durchmesser des Hohlraums liegt zweckmäßigerweise zwischen 0,2 und 2 mm, vorzugsweise zwischen 0,3 und 1,3 mm.

Die Deckschicht 13 wirkt äußert hautsympathisch. Dies liegt an dem verhältnismäßig großen Verhältnisses der Öffnungsfläche zur Gesamtfläche. Die Deckschicht 13 ist weich aber trotzdem zugfest. Die Weichheit begründet sich durch die Nachgiebigkeit der ausgedünnten Ausstülpungsränder. Die guten Festigkeitswerte sind darauf zurückzuführen, dass die Zonen des geringsten Durchmessers der Ausstülpungen, in denen bei Zugbeanspruchung der Folie die größten Spannungen auftreten, nicht gleichzeitig die Öffnungen bilden und daher nicht durch Kerbwirkungen oder Anteile besonders geringer Materialdichte geschwächt sind.

Als Material zur Herstellung der Deckschicht 13 werden Polyolefine bevorzugt, einschließlich deren Homopolymere, Mischungen von Homopolymeren, Copolymere, Mischungen von verschiedenen Copolymeren sowie Mischungen von Copolymeren und Homopolymeren.

## Patentansprüche

1. Anordnung zur Abgabe von Wirkstoffen an Agrar- oder Forsterzeugnisse mit einer Klebstoffschicht (11), die mindestens einen Wirkstoff (12) enthält, wobei die Klebstoffschicht (11) auf einer Fläche (23) haftet und die Klebstoffschicht (11) eine Deckschicht (13) mit der Fläche (23) verbindet, wobei die Deckschicht (13) eine Vielzahl von Öffnungen (14) zur Abgabe des Wirkstoffs (12) aufweist und die Deckschicht (13) vakuumperforiert ist und Ausstülpungen (15) aufweist, die aus einer Ebene (16) der Deckschicht (13) um eine Höhe (17) hervorragen, wobei die Öffnungen (14) von den Ausstülpungen (15) gebildet werden.

2. Anordnung nach Anspruch 1, **dadurch gekennzeichnet, dass** jede Ausstülpung (15) eine Wandung (18) aufweist, die einen Hohlraum (19) bildet und eine Öffnung (14) umschließt.

3. Anordnung nach Anspruch 1 oder 2, **dadurch gekennzeichnet, dass** die Höhe (17) der Ausstülpungen (15) um mehr als den Faktor 5, insbesondere mehr als den Faktor 10, größer ist als eine Dicke (21) der Ebene (16) der Deckschicht (13).

4. Anordnung nach einem der Ansprüche 1 bis 3, **dadurch gekennzeichnet, dass** die Höhe (17) der Ausstülpungen (15) mehr als 100 µm, insbesondere mehr als 300 µm beträgt.

5. Anordnung nach einem der Ansprüche 1 bis 4, **dadurch gekennzeichnet, dass** die Höhe (17) der Ausstülpungen (15) weniger als 1500 µm, insbesondere weniger als 1000 µm beträgt.

6. Anordnung nach einem der Ansprüche 2 bis 5, **dadurch gekennzeichnet, dass** sich der Querschnitt des Hohlraums (19) ausgehend von einem engsten Querschnitt (22) zur Öffnung (14) hin erweitert.

7. Anordnung nach einem der Ansprüche 1 bis 6, **dadurch gekennzeichnet, dass** die Ausstülpungen (15) von der Klebstoffschicht (11) wegragen und die Öffnungen (14) vom einem äußeren Rand (20) der Ausstülpungen (15) gebildet werden.

8. Anordnung nach einem der Ansprüche 1 bis 6, **dadurch gekennzeichnet, dass** die Ausstülpungen (15) zur Klebstoffschicht (13) hinragen und die Öffnungen (14) in der Ebene (16) der Deckschicht (13) angeordnet sind.

9. Anordnung nach Anspruch 8, **dadurch gekennzeichnet, dass** zwischen benachbarten Ausstülpungen (15) Räume (24) gebildet werden.

10. Anordnung nach einem der Ansprüche 1 bis 9, **dadurch gekennzeichnet, dass** ein äußerer Rand (20) der Ausstülpungen (15) eine unregelmäßig gelappte und/oder gefaltete Form aufweist.

11. Verfahren zur Herstellung einer Anordnung nach einem der Ansprüche 1 bis 10 umfassend folgende Schritte:
- Einbringen eines Wirkstoffs (12) in einen Klebstoff,
- Führen eines thermoplastischen Materials über ein Element (27), das Löcher (31) aufweist,
- Einziehen von thermoplastischen Material in die Löcher (31) durch einen Differenzdruck,
- Ausdünnen von thermoplastischen Material im Bereich der Löcher (31) und Bildung von Öffnungen (14),
- Ausbildung einer Deckschicht (13) mit Ausstülpungen (15) unter Erkaltung des thermoplastischen Materials,
- Verbinden der Deckschicht (13) mit einer Fläche (23) über den wirkstoffhaltigen Klebstoff.

12. Verfahren nach Anspruch 11, **dadurch gekennzeichnet, dass** das thermoplastische Material als Schmelze auf das Element (27) aufgebracht wird.

13. Verfahren nach Anspruch 11, **dadurch gekennzeichnet, dass** das thermoplastische Material als erwärmte Folie über das Element (27) geführt wird.

14. Verfahren nach einem der Ansprüche 11 bis 13, **dadurch gekennzeichnet, dass** der Klebstoff als Klebstoffschicht (11) auf die Ffäche (23) und/oder die Deckschicht (13) aufgebracht wird.

## Claims

1. Arrangement for dispensing active substances on agricultural or forestry products with an adhesive layer (11) that contains at least one active substance (12), wherein
the adhesive layer (11) adheres to a surface (23) and the adhesive layer (11) connects a cover layer (13) with the surface (23), wherein the cover layer (13) has a multiplicity of openings (14) for dispensing the active substance (12), and the cover layer (13) is vacuum-perforated and has protuberances (15) which project from a plane (16) of the cover layer (13) by a height (17), wherein the openings (14) are formed by the protuberances (15).

2. Arrangement according to Claim 1, **characterized in that** each protuberance (15) has a wall (18) that forms a cavity (19) and encloses an opening (14).

3. Arrangement according to Claim 1 or 2, **characterized in that** the height (17) of the protuberances (15) is greater than 5 times, in particular greater than 10 times larger than a thickness (21) of the plane (16) of the cover layer (13).

4. Arrangement according to one of Claims 1 to 3, **characterized in that** the height (17) of the protuberances (15) is more than 100 µm, in particular more than 300 µm.

5. Arrangement according to one of Claims 1 to 4, **characterized in that** the height (17) of the protuberances (15) is less than 1500 µm, in particular less than 1000 µm.

6. Arrangement according to one of Claims 2 to 5, **characterized in that** the cross section of the cavity (19) widens, from a narrowest cross section (22), towards the opening (14).

7. Arrangement according to one of Claims 1 to 6, **characterized in that** the protuberances (15) extend away from the adhesive layer (11), and the openings (14) are formed by an outer rim (20) of the protuberances (15).

8. Arrangement according to one of Claims 1 to 6, **characterized in that** the protuberances (15) extend towards the adhesive layer (13) and the openings (14) are arranged in the plane (16) of the cover layer (13).

9. Arrangement according to Claim 8, **characterized in that** spaces (24) are formed between adjacent protuberances (15).

10. Arrangement according to one of Claims 1 to 9, **characterized in that** an outer rim (20) of the protuberances (15) has an irregularly lobed and/or folded shape.

11. Method for producing an arrangement according to one of Claims 1 to 10, comprising the following steps:
- introducing an active substance (12) into an adhesive,
- guiding a thermoplastic material over an element (27) which has holes (31),
- drawing thermoplastic material into the holes (31) by means of a pressure difference,
- thinning thermoplastic material in the region of the holes (31) and forming openings (14),
- forming a cover layer (13) with protuberances (15) while cooling the thermoplastic material,
- connecting the cover layer (13) to a surface (23) by means of the adhesive containing the active substance.

12. Method according to Claim 11, **characterized in that** the thermoplastic material is applied to the element (27) as a melt.

13. Method according to Claim 11, **characterized in that** the thermoplastic material is guided over the element (27) as a heated film.

14. Method according to one of Claims 11 to 13, **characterized in that** the adhesive is deposited onto the surface (23) and/or onto the cover layer (13) as an adhesive layer (11).

## Revendications

1. Ensemble de libération de principes actifs sur des produits agricoles ou forestiers avec une couche de colle (11), qui contient au moins un principe actif (12), dans lequel la couche de colle (11) adhère sur une face (23) et la couche de colle (11) relie une couche de recouvrement (13) à la face (23), dans lequel la couche de recouvrement (13) présente une multiplicité d'ouvertures (14) pour la délivrance du principe actif (12) et la couche de recouvrement (13) est perforée sous vide et présente des protubérances (15), qui sont saillantes d'une hauteur (17) hors d'un plan (16) de la couche de recouvrement (13), dans lequel les ouvertures (14) sont formées par les protubérances (15).

2. Ensemble selon la revendication 1, **caractérisé en ce que** chaque protubérance (15) présente une paroi (18), qui forme une cavité (19) et entoure une ouverture (14).

3. Ensemble selon la revendication 1 ou 2, **caractérisé en ce que** la hauteur (17) des protubérances (15) est plus grande de plus d'un facteur 5, en particulier de plus d'un facteur 10, qu'une épaisseur (21) du plan (16) de la couche de recouvrement (13).

4. Ensemble selon l'une quelconque des revendications 1 à 3, **caractérisé en ce que** la hauteur (17) des protubérances (15) vaut plus de 100 µm, en particulier plus de 300 µm.

5. Ensemble selon l'une quelconque des revendications 1 à 4, **caractérisé en ce que** la hauteur (17) des protubérances (15) vaut moins de 1500 µm, en particulier moins de 1000 µm.

6. Ensemble selon l'une quelconque des revendications 2 à 5, **caractérisé en ce que** la section transversale de la cavité (19) s'élargit à partir d'une section transversale très étroite (22) en direction de l'ouverture (14).

7. Ensemble selon l'une quelconque des revendications 1 à 6, **caractérisé en ce que** les protubérances (15) partent de la couche de colle (11) et les ouvertures (14) sont formées par un bord extérieur (20) des protubérances (15).

8. Ensemble selon l'une quelconque des revendications 1 à 6, **caractérisé en ce que** les protubérances (15) s'étendent vers la couche de colle (13) et les ouvertures (14) sont disposées dans le plan (16) de la couche de recouvrement (13).

9. Ensemble selon la revendication 8, **caractérisé en ce que** des espaces (24) sont formés entre des protubérances voisines (15).

10. Ensemble selon l'une quelconque des revendications 1 à 9, **caractérisé en ce qu'**un bord extérieur (20) des protubérances (15) présente une forme à lobes et/ou à plis irréguliers.

11. Procédé pour fabriquer un ensemble selon l'une quelconque des revendications 1 à 10, comprenant les étapes suivantes:
- introduire un principe actif (12) dans une colle,
- conduire un matériau thermoplastique au-dessus d'un élément (27), qui présente des trous (31),
- attirer du matériau thermoplastique dans les trous (31) par une différence de pression,
- amincir du matériau thermoplastique dans la région des trous (31) et former des ouvertures (14),
- former une couche de recouvrement (13) avec des protubérances (15) par refroidissement du matériau thermoplastique,
- assembler la couche de recouvrement (13) à une face (23) au moyen de la colle contenant un principe actif.

12. Procédé selon la revendication 11, **caractérisé en ce que** l'on dépose le matériau thermoplastique sous forme fondue sur l'élément (27).

13. Procédé selon la revendication 11, **caractérisé en ce que** l'on conduit le matériau thermoplastique sous forme de feuille chauffée au-dessus de l'élément (27).

14. Procédé selon l'une des revendications 11 à 13, **caractérisé en ce que** l'on dépose la colle sous forme de couche de colle (11) sur la face (23) et/ou sur la couche de recouvrement (13).
